# EUROPÄISCHE PATENTSCHRIFT

(11) **EP 1 582 780 B1**
(45) Veröffentlichungstag und Bekanntmachung des Hinweises auf die Patenterteilung: **10.12.2008**
(21) Anmeldenummer: 05005074.9
(22) Anmeldetag: 09.03.2005
(51) Int. Cl.: F16H 61/28, F16H 61/30, F16H 61/32, F16H 63/30

(54) **Schalteinrichtung für ein Wechselgetriebe sowie Verfahren zum Betreiben einer Schalteinrichtung**
Gearshift device for a change-speed gearbox and method for operating a gearshift device
Mécanisme de changement de vitesse pour une boîte de vitesse à engrenages et procédé pour actionner un mécanisme de changement de vitesse

(30) Priorität: 31.03.2004 DE 102004015756
(43) Veröffentlichungstag der Anmeldung: 05.10.2005
(73) Patentinhaber: Dr. Ing. h.c. F. Porsche Aktiengesellschaft, 70435 Stuttgart (DE)
(72) Erfinder: Kluge, Marc, 74354 Besigheim (DE)

(56) Entgegenhaltungen:
- DE-B- 1 101 177
- SU-A1- 1 093 575
- US-A- 5 205 179
- US-B1- 6 301 984
- US-B1- 6 427 548

## Beschreibung

Die Erfindung betrifft eine Schalteinrichtung für ein Wechselgetriebe sowie ein Verfahren zum Betreiben einer derartigen Schalteinrichtung gemäß den Merkmalen der Oberbegriffe der Patentansprüche 1 und 4. Die US-B-6 301 984 wird als nächstliegender Stand der Technik gegenüber Ansprüchen 1 und 4 angesehen.

Aus dem Stand der Technik (siehe z.B. Fachbuch "Zahnradgetriebe", Johannes Looman, 2. Auflage, Springer-Verlag) sind für die Synchronisierung von Getriebegängen hydraulische Verstelleinrichtungen bekannt. Dabei wird der Schaltschlitten einer Schaltgabel über einen Hydraulikzylinder verschoben, so dass die drehfest aber längsverschieblich auf der Getriebewelle angeordnete Schaltmuffe mit dem Schaltzahnrad in Wirkverbindung gebracht werden kann. Neben diesen hydraulischen Verstelleinrichtungen sind auch elektrische Verstelleinheiten für die Synchronisierung bzw. die Gangwahl bekannt. Beide Stelleinrichtungen weisen bestimmte Vor- und Nachteile auf. Der Vorteil einer elektromotorischen Aktorik besteht in der genauen Positioniermöglichkeit und einer schnellen Schaltgeschwindigkeit bei kleiner Kraft. Dem gegenüber ist die Schaltgeschwindigkeit bei hoher Kraft langsam, so dass für die Gangwahl entsprechend notwendig dimensionierte Elektromotoren einen großen Bauraum aufweisen. Der Vorteil der hydraulischen Aktorik liegt in einer schnellen Schaltgeschwindigkeit bei hoher Kraft, während die präzise Positionierung der Schaltelemente, d.h. der Schaltgabeln nur durch einen erheblichen Steuerungs- bzw. Regelungsaufwand realisierbar ist.

Aufgabe der Erfindung ist es, die Hilfskraft betätigte Verstelleinrichtung für den Gangwechsel eines insbesondere automatisierten Schaltgetriebes zu verbessern.

Die Aufgabe wird durch die im Anspruch 1 und 4 aufgeführten Merkmale bzw. Maßnahmen gelöst.

Durch die kombinierte elektro-hydraulische Hilfskrafteinrichtung zum Betätigen der Schaltgabel werden die eingangs erwähnten Vorteile beider Antriebssysteme auf synergetische Art und Weise kombiniert, während die Nachteile beider Einzelsysteme auf vorteilhafte Art und Weise eliminiert sind.

Durch die in den Unteransprüchen aufgeführten Maßnahmen sind vorteilhafte Ausgestaltungen und Weiterbildungen der Schalteinrichtung möglich.

Die Hilfskrafteinrichtung besteht dabei aus einem Elektromotor und einem über ein Schaltventil aktivierbaren Hydraulikzylinder, wobei beide Bauelemente mit ihren Stellorganen an einem Schaltschlitten der Schaltgabel angreifen.

Der Schaltschlitten der Schaltgabel wird dabei auf der einen Seite über eine Spindel des Elektromotors längsverschieblich geführt; der Hydraulikzylinder weist zwei Druckräume auf, die durch einen Stellkolben voneinander getrennt sind. An den Stellkolben ist eine Kolbenstange befestigt, die ebenfalls an dem Schaltschlitten der Schaltgabel angreift und für eine Verstellung der Schaltgabel sorgt.

Das Betreiben der Verstelleinrichtung erfolgt dabei nach einem Art "Servolenkungs-Prinzip", bei dem nach dem Starten des Elektromotors oder nach einem ersten durch den Elektromotor betriebenen Stellweg über ein Schaltventil zusätzlich der Hydraulikzylinder die Verstellbewegung der Schaltgabel unterstützt.

Ein Ausführungsbeispiel der Erfindung ist in der Zeichnung dargestellt und wird nachfolgend näher erläutert.

Es zeigen:
- Fig. 1: einen schematischen Aufbau einer Schalteinrichtung für ein Wechselgetriebe,
- Fig. 2: eine erste Schaltposition der Schalteinrichtung und
- Fig. 3: eine zweite Schaltposition der Schalteinrichtung.

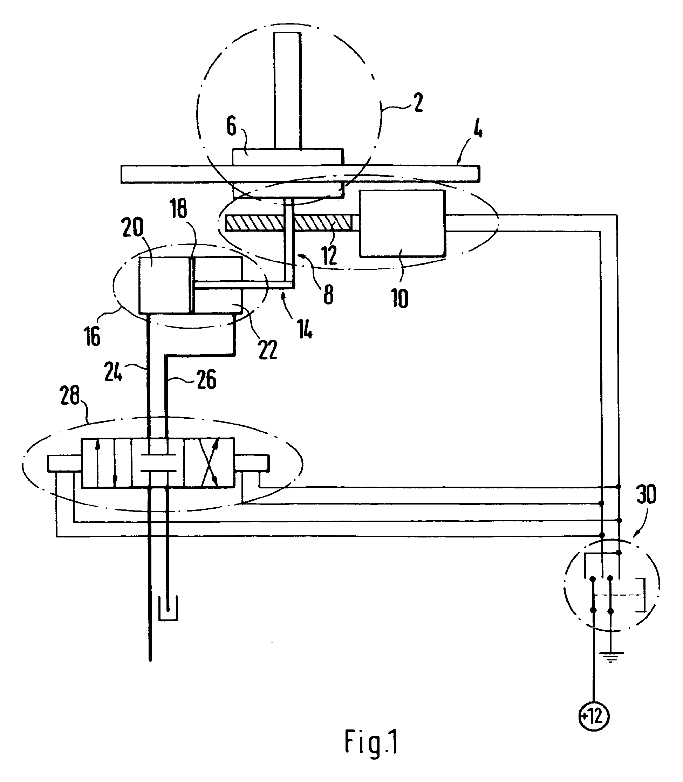

Eine Schaltgabel 2 ist auf einer Schaltstange 4 mittels eines Schaltschlittens 6 längsverschieblich geführt. Die Schaltgabel 2 greift auf bekannte Art und Weise in eine Schaltmuffe ein, die drehfest und längsverschieblich auf einer Getriebewelle angeordnet ist. Über die Schiebe- bzw. Schaltmuffe und einer zwischen Schiebemuffe und dem zu schaltenden Zahnrad angeordneten Synchronisiereinrichtung erfolgt dabei der entsprechende Gangwechsel. Am Schaltschlitten 6 ist ein Stellarm 8 befestigt, der durch eine von einem Elektromotor 10 angetriebene Spindel 12 verstellbar ist. Darüber hinaus ist eine Kolbenstange 14 eines doppelt wirkenden Hydraulikzylinders 16 am Stellarm 8 angebunden; durch eine Beaufschlagung der beiden von einem Kolben 18 getrennten Druckräume 20 bzw. 22 wird über den Hydraulikzylinder 16 ebenfalls eine Verschiebung der Schaltgabel 2 in beide Richtungen ermöglicht. An die beiden Druckräume 20 und 22 ist jeweils eine Hydraulikleitung 24 und 26 angeschlossen, die über ein 4/3 - Schaltventil 28 zu einem nicht näher dargestellten Öltank führen. Dabei können über das 4/3 - Schaltventil 28 wahlweise einer der beiden Druckräume 20 bzw. 22 mit Hydrauliköl beaufschlagt werden oder, wie in Fig. 1 dargestellt, beide Hydraulikleitungen 24 und 26 verschlossen werden. Der Elektromotor 10 wie auch das Schaltventil 28 sind elektrisch mit einer Schaltungseinrichtung 30 verbunden.

Die Verstell- bzw. Schalteinrichtung funktioniert auf folgende Art und Weise:

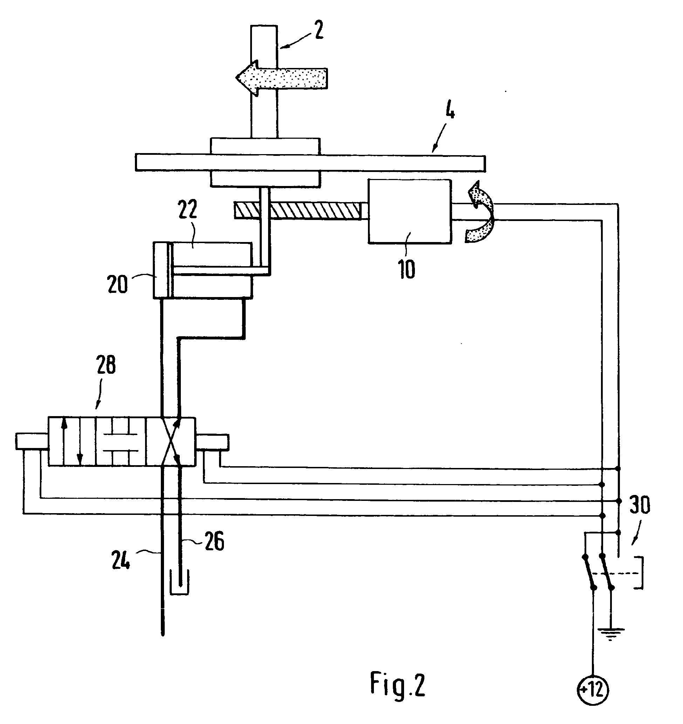

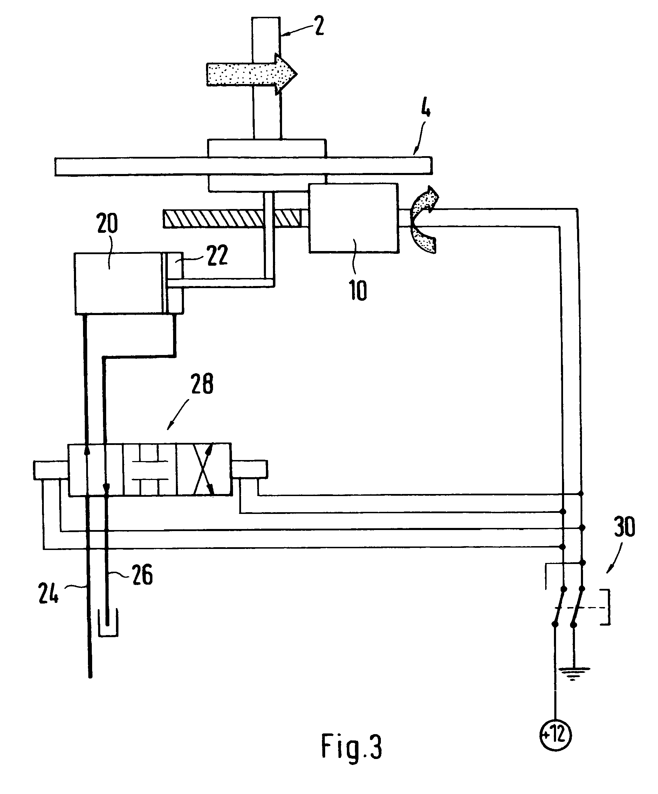

Zur Verstellung bzw. Verschiebung der Schaltgabel 2 auf der Schaltstange 4 wird über die Schaltungseinrichtung 30 der Elektromotor 10 gestartet, wobei über die Spindel 12 der Schaltschlitten 6 bzw. die Schaltgabel 2 auf der Schaltstange 4 nach links bzw. nach rechts bewegt wird. Gleichzeitig mit dem Starten des Elektromotors 10 oder alternativ dazu, nach einem ersten durch den Elektromotor 10 betriebenen Verstellweg, wird über die Schaltungseinrichtung 30 das Schaltventil 28 aktiviert und einem der beiden Druckräume 20 bzw. 22 des Hydraulikzylinders 16 Hydrauliköl zugeführt, so dass die Kolbenstange 14 und somit der Schaltschlitten 6 bzw. die Schaltgabel 2, durch den elektromotorischen Antrieb unterstützt, nach links bzw. rechts bewegt wird. In Fig. 2 ist dabei die Schaltstellung des Schaltventils 28 für eine Verstellung der Schaltgabel 2 nach links dargestellt, während in Fig. 3 die Schaltstellung des Schaltventils 28 für eine Verstellung der Schaltgabel 2 nach rechts dargestellt ist.

## Patentansprüche

1. Schalteinrichtung für ein Wechselgetriebe, insbesondere automatisiertes Schaltgetriebe für ein Kraftfahrzeug, mit einer Schaltstange (4), auf der mindestens eine Schaltgabel (2) längsverschieblich gelagert ist, wobei die Schaltgabel in ein Verbindungsorgan z.B. eine Schaltmuffe einer Synchronisiereinheit eingreift, die auf einer Getriebewelle angeordnet ist, und dass zur Verstellung der Schaltgabel (2) ein Hilfskraft betätigbarer Antrieb (16, 10) vorgesehen ist, **dadurch gekennzeichnet, dass** der Antrieb aus einer kombinierten elektro- hydraulischen Verstelleinrichtung (10, 16) besteht, die aus jeweils einer elektrischen Verstelleinrichtung (10) und aus einer hydraulischen Verstelleinrichtung (16) gebildet ist, wobei sowohl die elektrische (10) als auch die hydraulische (16) Verstelleinrichtung mit der Schaltgabel (2) verbunden sind.

2. Schalteinrichtung nach Anspruch 1, **dadurch gekennzeichnet, dass** die Verstelleinrichtung aus einem Elektromotor (10) und einem über ein Schaltventil (28) aktivierbaren Hydraulikzylinder (16) besteht, die beide zur Verstellung der Schaltgabel (2) mit ihren Stellorganen (12, 14) an einem Schaltschlitten (6) der Schaltgabel (2) angreifen.

3. Schalteinrichtung nach Anspruch 2, **dadurch gekennzeichnet, dass** der Elektromotor (10) den Schaltschlitten (6) über eine Spindel (12) antreibt, während der Hydraulikzylinder (16) zwei Druckräume (20, 22) aufweist, die durch einen Stellkolben (18) voneinander getrennt sind.

4. Verfahren zum Betreiben einer Schalteinrichtung gemäß den Merkmalen einer der Ansprüche 2 und 3, **dadurch gekennzeichnet, dass** nach dem Starten des Elektromotors (10) oder nach einem ersten durch den Elektromotor (10) betriebenen Stellweg über das Schaltventil (28) der Hydraulikzylinder (16) aktiviert wird.

## Claims

1. Gearshift device for a change-speed gearbox, in particular automatic change-speed gearbox for a motor vehicle, having a gearshift rod (4) on which at least one gearshift fork (2) is mounted in a longitudinally movable manner, with the gearshift fork engaging into a connecting element, for example a gearshift sleeve, of a synchronizing unit which is arranged on a gearbox shaft, and with a drive (16, 10) which can apply an auxiliary force being provided for adjusting the gearshift fork (2), **characterized in that** the drive is composed of a combined electro-hydraulic adjusting device (10, 16) which is formed from in each case one electric adjusting device (10) and one hydraulic adjusting device (16), with both the electric (10) and also the hydraulic (16) adjusting devices being connected to the gearshift fork (2).

2. Gearshift device according to Claim 1, **characterized in that** the adjusting device is composed of an electric motor (10) and a hydraulic cylinder (16) which can be activated by means of a switching valve (28), which electric motor (10) and hydraulic cylinder (16) both engage, for the adjustment of the gearshift fork (2), with their adjusting elements (12, 14) on a gearshift carriage (6) of the gearshift fork (2).

3. Gearshift device according to Claim 2, **characterized in that** the electric motor (10) drives the gearshift carriage (6) by means of a spindle (12), while the hydraulic cylinder (16) has two pressure chambers (20, 22) which are separated from one another by means of an actuating piston (18).

4. Method for operating a gearshift device as per the features of one of Claims 2 and 3, **characterized in that,** after the electric motor (10) is started or after the electric motor (10) has covered a first actuating travel, the hydraulic cylinder (16) is activated by means of the switching valve (28).

## Revendications

1. Mécanisme de changement de vitesse pour une boîte de vitesses à engrenages, en particulier une boîte de vitesses automatisée pour un véhicule automobile, comprenant une tringle de changement de vitesse (4) sur laquelle est montée au moins une fourche de changement de vitesse (2) déplaçable longitudinalement, la fourche de changement de vitesse venant en prise dans un organe de liaison, par exemple un manchon de changement de vitesse d'une unité de synchronisation, qui est disposée sur un arbre de changement de vitesse et un entraînement (16, 10) pouvant être actionné par une force auxiliaire étant prévu pour le réglage de la fourche de changement de vitesse (2), **caractérisé en ce que** l'entraînement se compose d'un mécanisme de réglage (10, 16) électrohydraulique combiné, qui est formé par un mécanisme de réglage électrique (10) et un mécanisme de réglage hydraulique (16), tant le mécanisme de réglage électrique (10) que le mécanisme de réglage hydraulique (16) étant connectés à la fourche de changement de vitesse (2).

2. Mécanisme de changement de vitesse selon la revendication 1, **caractérisé en ce que** le dispositif de réglage se compose d'un moteur électrique (10) et d'un vérin hydraulique (16) pouvant être activé par le biais d'une soupape de commutation (28), les deux venant en prise pour le réglage de la fourche de changement de vitesse (2) avec leurs organes de commande (12, 14) sur un chariot de changement de vitesse (6) de la fourche de changement de vitesse (2).

3. Mécanisme de changement de vitesse selon la revendication 2, **caractérisé en ce que** le moteur électrique (10) entraîne le chariot de changement de vitesse (6) par le biais d'une broche (12), tandis que le cylindre hydraulique (16) présente deux espaces de pression (20, 22) qui sont séparés l'un de l'autre par un piston de commande (18).

4. Procédé pour faire fonctionner un mécanisme de changement de vitesse selon les caractéristiques de l'une des revendications 2 ou 3, **caractérisé en ce qu'**après le démarrage du moteur électrique (10) ou après une première course de réglage entraînée par le moteur électrique (10) par le biais de la soupape de commutation (28), le cylindre hydraulique (16) est activé.
